# EUROPÄISCHE PATENTSCHRIFT

(11) **EP 3 581 374 B1**
(45) Veröffentlichungstag und Bekanntmachung des Hinweises auf die Patenterteilung: **10.04.2024**
(21) Anmeldenummer: 19176662.5
(22) Anmeldetag: 27.05.2019
(51) Int. Cl.: B30B 9/24, B30B 15/08, B01D 33/46, B01D 33/073, B01D 33/04

(54) **VORRICHTUNG ZUM TRENNEN VON MITEINANDER VERMISCHTEN STOFFEN UNTERSCHIEDLICHER FLIESSFÄHIGKEIT MIT EINEM ABSTREIFELEMENT**
APPARATUS FOR SEPARATING MATERIALS OF VARYING FLOWABILITY THAT ARE MIXED TOGETHER, WITH A SCRAPING ELEMENT
DISPOSITIF DE SÉPARATION DE MATIÈRES MÉLANGÉES LES UNES AUX AUTRES À FLUIDITÉ VARIABLE, AVEC UN ÉLÉMENT DE RACLAGE

(30) Priorität: 30.05.2018 DE 102018112902
(43) Veröffentlichungstag der Anmeldung: 18.12.2019
(73) Patentinhaber: Nordischer Maschinenbau Rud. Baader GmbH + Co. KG, 23560 Lübeck (DE)
(72) Erfinder: Rose, Wolfgang, 23617 Stockelsdorf-Eckhorst (DE); Fleischmann, Julia, 21493 Schwarzenbek (DE); Karsten, Uwe, 18225 Kühlungsborn (DE)
(74) Vertreter: Stork Bamberger Patentanwälte PartmbB

(56) Entgegenhaltungen:
- AU-B2- 528 698
- FR-E- 96 320
- GB-A- 2 346 862
- JP-A- S6 082 519
- US-A- 4 328 888
- US-A- 5 222 589
- US-A- 5 674 117
- US-A1- 2010 294 623
- US-A1- 2015 360 880

## Beschreibung

Die Erfindung betrifft eine Vorrichtung zum Trennen von miteinander vermischten Stoffen unterschiedlicher Fließfähigkeit, umfassend ein Rahmengestell, eine umlaufend angetriebene und am Rahmengestell gelagerte Hohltrommel mit perforierter Mantelfläche, ein von außen im Bereich der Mantelfläche der Hohltrommel liegendes Presselement, derart, dass die Hohltrommel und das Presselement einen Produkt-Einzugskeil zum Leiten eines aus Pressgut bestehenden Produktstroms zwischen die Hohltrommel und das Presselement bilden, sowie mindestens ein Abstreifelement zum Abstreifen des Pressguts von der Hohltrommel, wobei das Abstreifelement ausgebildet und eingerichtet ist zum Abstreifen von außen an einer Hohltrommel anliegenden Stoffresten. US 5 674 117 A beschreibt eine solche Vorrichtung gemäß dem Oberbegriff des Anspruchs 1.

Solche Vorrichtungen mit den Abstreifelementen dienen insbesondere in der Nahrungsmittel verarbeitenden Industrie - aber auch in anderen Industriebereichen - dazu, Stoffreste, die von außen an einer Hohltrommel einer Vorrichtung zum Trennen von miteinander vermischten Stoffen unterschiedlicher Fließfähigkeit anliegen, zu lösen. Die Abstreifelemente sind als Einzel- oder Austauschteil einsetzbar und üblicherweise in eine solche Vorrichtung zum Trennen von miteinander vermischten Stoffen unterschiedlicher Fließfähigkeit integriert. Die Vorrichtungen, die auch als Separatoren bezeichnet werden, umfassen eine perforierte Hohltrommel, nämlich die Lochtrommel, die um eine Rotationsachse rotierend antreibbar und in Seitenwänden des Rahmengestells, beispielsweise einem Gehäuse, gelagert ist. Mit dem Presselement werden die miteinander vermischten Stoffe, also das Trenngut bzw. Pressgut, von außen gegen die perforierte Mantelfläche der Hohltrommel gedrückt. Unter diesem Druck werden die leichter fließenden Bestandteile des Pressguts in den inneren Hohlraum der rotierenden Hohltrommel gepresst und aus diesem abgeführt, während die schwerer fließenden Bestandteile des Pressguts außen auf der Mantelfläche verbleiben. Diese werden von dem Abstreifelement von der Mantelfläche gelöst.

Sowohl das Presselement als auch das Abstreifelement sind seitlich durch Seitenwände der Vorrichtung oder entsprechende Schutzbleche begrenzt. Das Abstreifelement ist mit seiner Abstreifkante auf die Mantelfläche der Hohltrommel gerichtet, derart, dass sich die Abstreifkante parallel zur Rotationsachse der Hohltrommel erstreckt. Zwischen der Abstreifkante einerseits und der Mantelfläche andererseits ist üblicherweise ein geringer Abstand vorgesehen, der jedoch einstellbar ausgebildet ist. Die Abstreifkante kann aber auch an der Mantelfläche anliegen. Durch die Rotation der Hohltrommel trifft die stehende Abstreifkante des Abstreifelementes auf außen an der Hohltrommel anliegende Stoffreste, die nicht durch Öffnungen in der Mantelfläche in das Innere der Hohltrommel gepresst wurden. Das außen anliegende Restmaterial kann am Beispiel von Fleischprodukten Fleischreste, Sehnen und Knochen sowie Reste davon und dergleichen umfassen.

Bei den bekannten Abstreifelementen sind die Schmalseiten linear ausgebildet. Das bedeutet, dass die Schmalseiten und die Längsseiten in einem rechten Winkel zueinander stehen und jeweils eine durchgängige, lineare Ausrichtung bzw. einen geraden Verlauf aufweisen. Das führt insbesondere bei der Verarbeitung von Fleischprodukten dazu, dass sich im Randbereich zwischen den Schmalseiten des Abstreifelementes und den Seitenwänden bzw. Schutzblechen der Vorrichtung Bestandteile der Materialreste verfangen. Insbesondere Sehnen klemmen im Bereich der Schmalseiten ein, was dazu führt, dass die Ansammlung solcher Sehnen, Sehnenreste und anderer Bestandteile größer wird. Durch diesen Stau von Stoffresten ist der Betrieb der Verarbeitung gestört und führt letztlich zum Stillstand der Vorrichtung. Erst durch das Lösen des Abstreifelementes, also Ausbau und Einbau bzw. Austausch des Abstreifelements, kann der Materialstau wirksam beseitigt werden, was die Stillstandzeiten verlängert.

Der Erfindung liegt somit die Aufgabe zugrunde, eine Vorrichtung vorzuschlagen, die einen sicheren und zuverlässigen Betrieb gewährleistet.

Diese Aufgabe wird durch eine Vorrichtung 2. gemäß Anspruch 1 dadurch gelöst, dass das Abstreifelement einen plattenartigen und rechteckförmigen Grundkörper mit zwei Längsseiten L₁, L₂ und zwei gegenüber den Längsseiten L₁, L₂ kürzeren Schmalseiten S₁, S₂ umfasst, wobei an mindestens einer Längsseite L₁, L₂ eine Abstreifkante 12, 13 ausgebildet ist, und mindestens eine der beiden Schmalseiten S₁, S₂ mindestens teilweise konkav ausgebildet ist. Durch diese erfindungsgemäße Ausgestaltung wird ein Ausweichraum für die von der Mantelfläche gelösten Stoffreste geschaffen, der dazu führt, dass sich potentiell zwischen dem Abstreifelement einerseits und Seitenwänden, Schutzblechen oder anderen Begrenzungen andererseits einklemmende Stoffreste wieder lösen und noch einmal um die Lochtrommel geführt werden können. Mit anderen Worten wird durch die konkave Ausbildung mindestens einer Schmalseite das Einklemmen von außen an der Hohltrommel anliegenden Stoffresten, am Beispiel von Fleischprodukten insbesondere Sehnen, im Randbereich zwischen den Schmalseiten des Abstreifelementes und Seitenwänden, Schutzblechen oder dergleichen der Vorrichtung wirksam verhindert.

Eine besonders bevorzugte Ausführungsform ist dadurch gekennzeichnet, dass beide Schmalseiten mindestens teilweise konkav ausgebildet sind. Dadurch werden die bereits beschriebenen Vorteile weiter verstärkt.

Vorzugsweise ist an beiden Längsseiten eine Abstreifkante ausgebildet. Dadurch ist es möglich, das Abstreifelement variabel und universell einzusetzen bzw. in die Vorrichtung zu integrieren. Zum einen wird der Einbau dadurch erleichtert, wodurch sich die Stillstandzeiten beim Wechsel verkürzen. Zum anderen können die Abstreifelemente beidseitig eingesetzt werden.

Eine bevorzugte Weiterbildung zeichnet sich dadurch aus, dass der Grundkörper spiegelsymmetrisch zu seinen Mittelachsen M_{L} und M_{S} ausgebildet ist. Mit dieser Ausbildung ist der zuvor genannte Vorteil auf besonders einfache Weise erreichbar.

Vorteilhafterweise weist die oder jede Schmalseite eine U-förmige Ausnehmung auf. Diese Ausführung der konkaven Ausbildung der Schmalseite führt dazu, dass sich das zwischen der Schmalseite des Abstreifelementes und der Seitenwand, dem Schutzblech oder dergleichen der Vorrichtung befindliche Restmaterial aufgrund des steilen Verlaufes der Ausnehmung aus einer Klemmung befreien/lösen kann. Anders ausgedrückt kann das zwischen der Schmalseite des Abstreifelementes und der Seitenwand, dem Schutzblech oder dergleichen der Vorrichtung befindliche Restmaterial weg von der Seitenwand nach innen auf die Hohltrommelmitte hin geführt werden bzw. ausweichen.

Eine vorteilhafte Ausgestaltung des Abstreifelementes ist dadurch gekennzeichnet, dass sich die U-förmige Ausnehmung nur über einen Teil der Schmalseite erstreckt. Die U-förmige Ausnehmung nimmt also nicht die gesamte Breite der Schmalseiten ein. Das führt zunächst dazu, dass die Lochtrommel über die gesamte Breite freigekratzt wird, da sich die Schmalseiten mit ihren äußeren Kanten zunächst in einem rechten Winkel von der Abstreifkante erstrecken. Sobald das Restmaterial durch die Abstreifkante von der Mantelfläche gekratzt ist, kann das gelöste Restmaterial ausweichen, um ein Klemmen zwischen Abstreifelement und Seitenwand zu verhindern.

Eine besonders bevorzugte Weiterbildung ist dadurch gekennzeichnet, dass sich die U-förmige Ausnehmung ausgehend von der äußeren Kante der Schmalseite um mindestens 5 mm und höchstens 50 mm nach innen erstreckt. Diese Ausführung unterstützt die bereits weiter oben genannten Vorteile der zuverlässigen und effektiven Ableitung des zwischen der Schmalseite des Abstreifelementes und der Seitenwand, dem Schutzblech oder dergleichen der Vorrichtung befindlichen Restmaterials weg von der Seitenwand.

Vorteilhafterweise ist im Grundkörper mindestens eine Öffnung zum lösbaren Befestigen des Abstreifelementes an der Vorrichtung zum Trennen von miteinander vermischten Stoffen unterschiedlicher Fließfähigkeit ausgebildet. Damit wird ein schneller Wechsel bzw. ein schnelles Drehen des Abstreifelementes gewährleistet.

Weitere zweckmäßige und/oder vorteilhafte Merkmale und Weiterbildungen zur Vorrichtung zum Trennen von miteinander vermischten Stoffen unterschiedlicher Fließfähigkeit ergeben sich aus den Unteransprüchen und der Beschreibung. Besonders bevorzugte Ausführungsformen der Vorrichtung mit dem Abstreifelement werden anhand der beigefügten Zeichnung näher erläutert. In der Zeichnung zeigt:
- Fig. 1: eine schematische Darstellung einer ersten Ausführungsform eines Abstreifelementes in Draufsicht,
- Fig. 2: eine schematische Darstellung einer weiteren Ausführungsform eines Abstreifelementes in Draufsicht,
- Fig. 3: eine Seitenansicht des Abstreifelementes gemäß Figur 2 in Schnittansicht A-A,

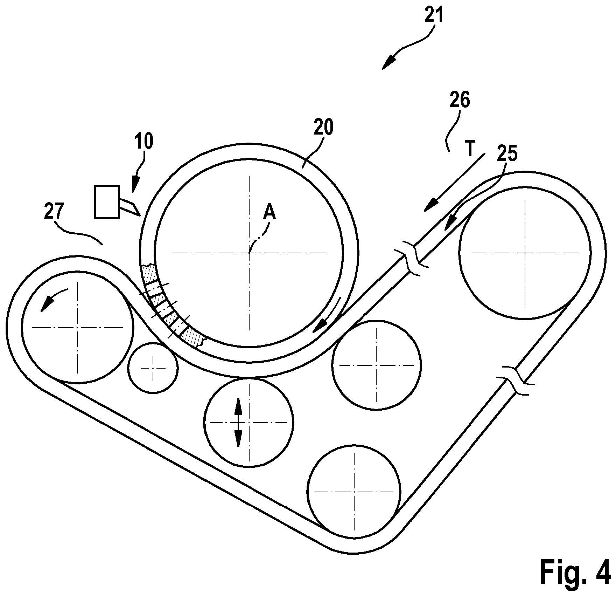

- Fig. 4: eine Vorrichtung zum Trennen von miteinander vermischten Stoffen unterschiedlicher Fließfähigkeit mit einem solchen Abstreifelement in Seitenansicht, und
- Fig. 5: die Vorrichtung gemäß Figur 4 in Draufsicht.

Das in der Zeichnung dargestellte Abstreifelement sowie die Vorrichtung zum Trennen von miteinander vermischten Stoffen unterschiedlicher Fließfähigkeit mit einem Abstreifelement dienen zum Verarbeiten von Fleischprodukten, dem so genannten Separieren von Fleischprodukten. Dazu gehören selbstverständlich auch Fischprodukte. Die Erfindung ist aber auch in der Verarbeitung von Früchten, von Gemüse oder anderen Materialien unterschiedlicher Fließfähigkeit einsetzbar.

Die Vorrichtung 21 zum Trennen von miteinander vermischten Stoffen unterschiedlicher Fließfähigkeit umfasst ein Rahmengestell 24, eine umlaufend angetriebene und am Rahmengestell 24 gelagerte Hohltrommel 20 mit perforierter Mantelfläche, ein von außen im Bereich der Mantelfläche der Hohltrommel 20 liegendes Presselement 25, derart, dass die Hohltrommel 20 und das Presselement 25 einen Produkt-Einzugskeil 26 zum Leiten eines aus Pressgut bestehenden Produktstroms zwischen die Hohltrommel 20 und das Presselement 25 bilden, sowie mindestens ein Abstreifelement 10 zum Abstreifen des Pressguts von der Hohltrommel 20, wobei das Abstreifelement 10 ausgebildet und eingerichtet ist zum Abstreifen von außen an der Hohltrommel 20 anliegenden Stoffresten.

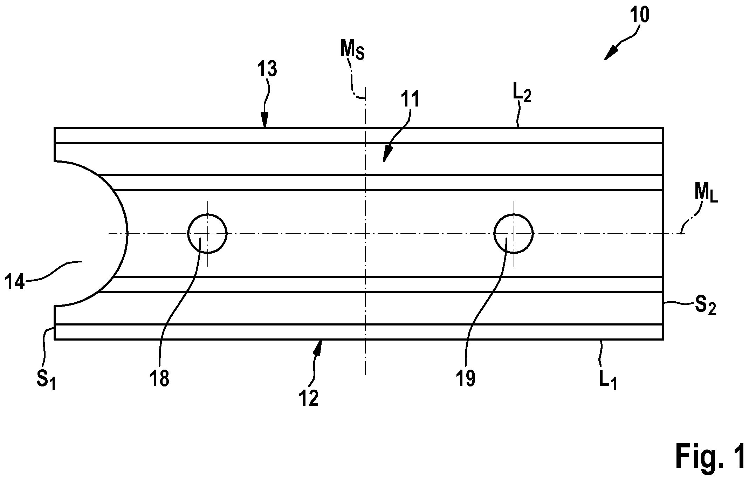

Diese Vorrichtung 21 zeichnet sich erfindungsgemäß dadurch aus, dass das Abstreifelement 10 einen plattenartigen und rechteckförmigen Grundkörper 11 mit zwei Längsseiten L, und L₂ und zwei gegenüber den Längsseiten L₁, L₂ kürzeren Schmalseiten S₁ und S₂, umfasst, wobei an mindestens einer Längsseite L₁, L₂ eine Abstreifkante 12, 13 ausgebildet, und mindestens eine der beiden Schmalseiten S₁, S₂ mindestens teilweise konkav ausgebildet ist. Das bedeutet, dass mindestens eine der Schmalseiten S₁, S₂ mindestens abschnittsweise nach innen gewölbt ist (siehe Figur 1). Der Begriff "nach innen" beschreibt den Verlauf bzw. die Ausrichtung der Einbuchtung der Schmalseiten S₁, S₂ ausgehend von den äußeren Kanten der Schmalseiten S₁, S₂, also in montiertem Zustand ausgehend von Seitenwänden 22, 23 (oder Schutzblechen oder anderen Begrenzungen) der Vorrichtung 21, an denen die Schmalseiten S₁, S₂ des Abstreifelementes 10 anliegen bzw. zu denen die Schmalseiten S₁, S₂ gerichtet sind, weg von den Seitenwänden 22, 23.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung und/oder der Zeichnung zusammengefasst oder in einer gemeinsamen Ausführungsform beschrieben sind, auch funktional eigenständig die weiter oben beschriebene Vorrichtung 21 weiterbilden können.

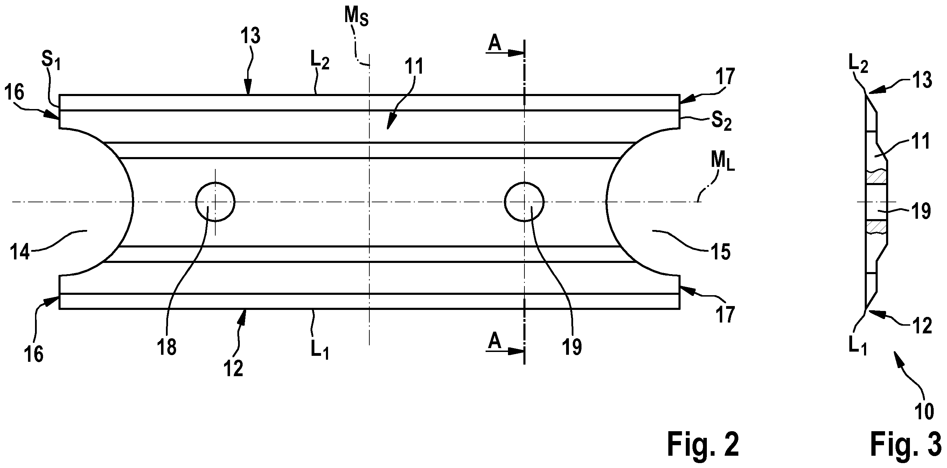

Der plattenartig ausgebildete Grundkörper 11, dessen Dicke im Vergleich zur Breite und Länge wesentlich geringer ist, besteht vorzugsweise aus einem verschleißfesten Material, wie zum Beispiel Edelstahl. Andere in der Nahrungsmittel verarbeitenden Industrie zugelassene Werkstoffe, auch keramische Werkstoffe, sind aber ebenfalls einsetzbar. Wie erwähnt, ist mindestens eine der beiden Längsseiten L₁, L₂ mit einer Abstreifkante 12 versehen. In der dargestellten Ausführungsform sind beide Längsseiten L₁, L₂ als Abstreifkante 12, 13 ausgebildet. Dazu weisen sie eine rampenartige Schräge auf (siehe insbesondere Figur 3). Die Schräge kann klingenartig ausgebildet und mit einem geraden Schliff versehen sein. Optional kann auch ein Wellenschliff oder ein anderes Schliffbild vorgesehen sein. Die Abstreifkanten 12, 13 können auch stumpf ausgebildet sein. Vorzugsweise ist der Grundkörper 11 spiegelsymmetrisch zu seinen Mittelachsen M_{L} und M_{S} ausgebildet. Die Mittelachse M_{L} verläuft parallel zu den Längsseiten L₁, L₂. Die Mittelachse Ms verläuft parallel zu den Schmalseiten S₁, S₂, also in Transportrichtung T des zu verarbeitenden Produktstroms. In anderen Ausführungsformen kann der Grundkörper 11 auch asymmetrisch ausgebildet sei, insbesondere in Bezug auf die Mittelachse M_{L}.

In einer besonders bevorzugten Ausführungsform sind beide Schmalseiten S₁, S₂ mindestens teilweise konkav ausgebildet (siehe Figur 2). Die konkave Ausbildung kann z.B. rechteckförmig oder V-förmig ausgebildet sein. In der dargestellten Ausführungsform weist die oder jede Schmalseite S₁, S₂ eine U-förmige Ausnehmung 14, 15 auf. Die Ausnehmungen 14, 15 können sich über die gesamte Länge der Schmalseiten S₁, S₂ erstrecken, indem sich die Ausnehmungen 14, 15 jeweils von den Schnittpunkten der Schmalseiten S₁, S₂ mit den Längsseiten L₁, L₂ erstrecken. Vorzugsweise erstrecken sich die U-förmigen Ausnehmungen 14, 15 aber nur über einen Teil der Schmalseiten S₁, S₂. Das bedeutet, dass sich Abschnitte 16, 17 der freien, äußeren Kanten der Schmalseiten S₁, S₂ ausgehend von den beschriebenen Schnittpunkten mit den Kanten der Längsseiten L₁, L₂ zunächst in einem rechten Winkel zu den Längsseiten L₁, L₂ erstrecken, bevor die freien, äußeren Kanten der Schmalseiten S₁, S₂ der U-Form folgen. Die Tiefe der Ausnehmungen 14, 15 ist variabel und hängt u.a. von den zu verarbeitenden Materialien ab. Besonders bevorzugt erstecken sich die U-förmigen Ausnehmungen 14, 15 ausgehend von den Abschnitten 16, 17 der freien, äußeren Kanten der Schmalseiten S₁, S₂ um mindestens 5 mm und höchstens 50 mm nach innen. In anderen Ausführungen können die Ausnehmungen 14, 15 auch tiefer ausgebildet sein.

Optional ist im Grundkörper 11 mindestens eine Öffnung 18 zum lösbaren Befestigen des Abstreifelementes 10 an der Vorrichtung 21 zum Trennen von miteinander vermischten Stoffen unterschiedlicher Fließfähigkeit ausgebildet. Die dargestellte Ausführungsform weist zwei Öffnungen 18, 19 auf. Das Abstreifelement 10 kann aber auch andere Befestigungsmittel oder Teile davon aufweisen, z.B. Vorsprünge oder dergleichen, die mit korrespondierenden Befestigungsmitteln oder Teilen davon, die an der Vorrichtung 21 angeordnet sind, zusammenwirken.

Wie bereits erwähnt, ist das Abstreifelement 10 ein Einzelteil, das als Wechsel-, Austausch- oder Verschleißteil eigenständig funktionsfähig ist. Bevorzugt ist das Abstreifelement 10 jedoch integraler Bestandteil einer Vorrichtung 21 zum Trennen von miteinander vermischten Stoffen unterschiedlicher Fließfähigkeit und in dieser lösbar befestigt.

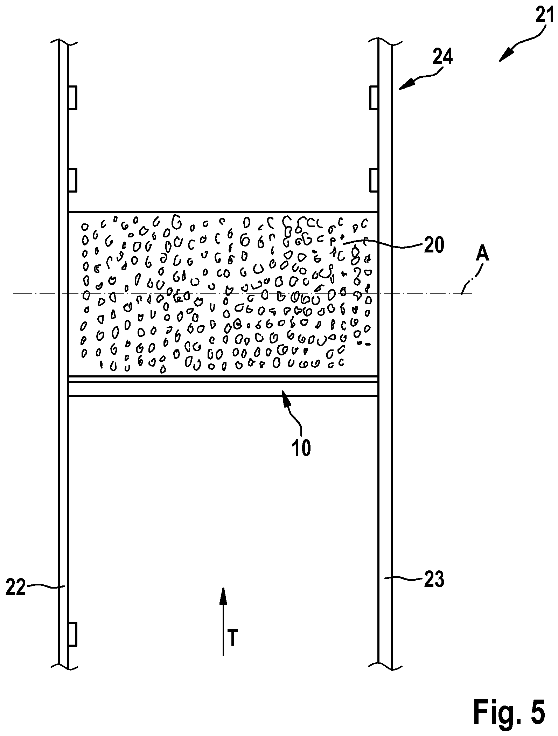

Das Rahmengestell 24 kann z.B. ein Gehäuse mit (nur teilweise in Figur 5) dargestellten Seitenwänden 22, 23 sein. Die Rotationsachse A der Hohltrommel 20 verläuft quer zur Transportrichtung T des Produktstroms. Vorzugsweise ist ein Abstreifelement 10 im Produktabgabebereich 27 in Transportrichtung T des Produktstroms hinter der Hohltrommel 20 angeordnet. Alternativ oder ergänzend ist ein weiteres Abstreifelement 10 im Bereich des Produkt-Einzugskeils 26 angeordnet. Jedes Abstreifmittel 10 kann einen Einstellmechanismus zur Verstellung des Abstandes zur Hohltrommel 20 aufweisen. Bevorzugt sind die Abstreifelemente 10 aktiv ansteuerbar.

## Patentansprüche

1. Vorrichtung (21) zum Trennen von miteinander vermischten Stoffen unterschiedlicher Fließfähigkeit, umfassend ein Rahmengestell (24), eine umlaufend angetriebene und am Rahmengestell (24) gelagerte Hohltrommel (20) mit perforierter Mantelfläche, ein von außen im Bereich der Mantelfläche der Hohltrommel (20) liegendes Presselement (25), derart, dass die Hohltrommel (20) und das Presselement (25) einen Produkt-Einzugskeil (26) zum Leiten eines aus Pressgut bestehenden Produktstroms zwischen die Hohltrommel (20) und das Presselement (25) bilden, sowie mindestens ein Abstreifelement (10) zum Abstreifen des Pressguts von der Hohltrommel (20), wobei das Abstreifelement (10) ausgebildet und eingerichtet ist zum Abstreifen von außen an der Hohltrommel (20) anliegenden Stoffresten, wobei das Abstreifelement (10) einen plattenartigen und rechteckförmigen Grundkörper (11) mit zwei Längsseiten (L₁, L₂) und zwei gegenüber den Längsseiten (L₁, L₂) kürzeren Schmalseiten (S₁, S₂) umfasst, wobei an mindestens einer Längsseite (L₁, L₂) eine Abstreifkante (12, 13) ausgebildet ist, **dadurch gekennzeichnet, dass** mindestens eine der beiden Schmalseiten (S₁, S₂) mindestens teilweise konkav ausgebildet ist.

2. Vorrichtung (21) nach Anspruch 1, **dadurch gekennzeichnet, dass** beide Schmalseiten (S₁, S₂) mindestens teilweise konkav ausgebildet sind.

3. Vorrichtung (21) nach Anspruch 1 oder 2, **dadurch gekennzeichnet, dass** an beiden Längsseiten (L₁, L₂) eine Abstreifkante (12, 13) ausgebildet ist.

4. Vorrichtung (21) nach einem oder mehreren der Ansprüche 1 bis 3, **dadurch gekennzeichnet, dass** der Grundkörper (11) spiegelsymmetrisch zu seinen Mittelachsen M_{L} und M_{S} ausgebildet ist.

5. Vorrichtung (21) nach einem oder mehreren der Ansprüche 1 bis 4, **dadurch gekennzeichnet, dass** die oder jede Schmalseite (S₁, S₂) eine U-förmige Ausnehmung (14, 15) aufweist.

6. Vorrichtung (21) nach Anspruch 5, **dadurch gekennzeichnet, dass** sich die U-förmige Ausnehmung (14, 15) nur über einen Teil der Schmalseite (S₁, S₂) erstreckt.

7. Vorrichtung (21) nach Anspruch 5 oder 6, **dadurch gekennzeichnet, dass** sich die U-förmige Ausnehmung (14, 15) ausgehend von der äußeren Kante der Schmalseite (S₁, S₂) um mindestens 5 mm und höchstens 50 mm nach innen erstreckt.

8. Vorrichtung (21) nach einem oder mehreren der Ansprüche 1 bis 7, **dadurch gekennzeichnet, dass** im Grundkörper (11) mindestens eine Öffnung (18, 19) zum lösbaren Befestigen des Abstreifelementes (10) an der Vorrichtung (21) zum Trennen von miteinander vermischten Stoffen unterschiedlicher Fließfähigkeit ausgebildet ist.

## Claims

1. Apparatus (21) for separating materials of different flowability which are mixed together, comprising a frame structure (24), a hollow drum (20) which is rotationally driven and mounted on the frame structure (24) and has a perforated lateral surface, a pressing element (25) which is located from outside in the region of the lateral surface of the hollow drum (20) in such a manner that the hollow drum (20) and the pressing element (25) form a product intake wedge (26) for guiding a product stream consisting of pressed material between the hollow drum (20) and the pressing element (25), and at least one stripping element (10) for stripping the pressed material from the hollow drum (20), wherein the stripping element (10) is configured and adapted to strip off material residues attached to the outside of the hollow drum (20), wherein the stripping element (10) comprises a plate-like and rectangular main body (11) with two long sides (L₁, L₂) and two narrow sides (S₁, S₂) which are shorter than the long sides (L₁, L₂), wherein a stripping edge (12, 13) is configured on at least one long side (L₁, L₂), **characterised in that** at least one of the two narrow sides (S₁, S₂) is at least partially concave.

2. Apparatus (21) according to claim 1, **characterised in that** both narrow sides (S₁, S₂) are at least partially concave.

3. Apparatus (21) according to claim 1 or 2, **characterised in that** a stripping edge (12, 13) is configured on both long sides (L₁, L₂).

4. Apparatus (21) according to one or more of claims 1 to 3, **characterised in that** the main body (11) is configured to be mirror-symmetrical with respect to its central axes M_{L} and M_{S}.

5. Apparatus (21) according to one or more of claims 1 to 4, **characterised in that** the or each narrow side (S₁, S₂) has a U-shaped recess (14, 15).

6. Apparatus (21) according to claim 5, **characterised in that** the U-shaped recess (14, 15) only extends over part of the narrow side (S₁, S₂).

7. Apparatus (21) according to claim 5 or 6, **characterised in that** the U-shaped recess (14, 15) extends inwards from the outer edge of the narrow side (S₁, S₂) by at least 5 mm and at most 50 mm.

8. Apparatus (21) according to one or more of claims 1 to 7, **characterised in that** at least one opening (18, 19) is configured in the main body (11) for releasably fastening the stripping element (10) to the apparatus (21) for separating materials of different flowability which are mixed together.

## Revendications

1. Dispositif (21) pour séparer des substances mélangées entre elles de fluidités différentes, comprenant un bâti (24), un tambour creux (20) entraîné en rotation et monté sur le bâti (24) avec une surface d'enveloppe perforée, un élément de presse (25) situé de l'extérieur dans la zone de la surface d'enveloppe du tambour creux (20), de telle sorte que le tambour creux (20) et l'élément de presse (25) forment un coin d'introduction de produit (26) pour guider un courant de produit constitué de matière à presser entre le tambour creux (20) et l'élément de presse (25), ainsi qu'au moins un élément de raclage (10) pour racler la matière à presser du tambour creux (20), l'élément de raclage (10) étant configuré et adapté pour racler des restes de matière s'appliquant à l'extérieur du tambour creux (20), l'élément de raclage (10) comprenant un corps de base (11) en forme de plaque et rectangulaire avec deux côtés longitudinaux (L₁, L₂) et deux côtés étroits (S₁, S₂) plus courts que les côtés longitudinaux (L₁, L₂), une arête de raclage (12, 13) étant configurée sur au moins un côté longitudinal (L₁, L₂), **caractérisé en ce qu'**au moins l'un des deux côtés étroits (S₁ S₂) est configuré au moins partiellement sous forme concave.

2. Dispositif (21) selon la revendication 1, **caractérisé en ce que** les deux côtés étroits (S₁, S₂) sont configurés au moins partiellement sous forme concave.

3. Dispositif (21) selon la revendication 1 ou 2, **caractérisé en ce qu'**une arête de raclage (12, 13) est configurée sur les deux côtés longitudinaux (L₁, L₂).

4. Dispositif (21) selon une ou plusieurs des revendications 1 à 3, **caractérisé en ce que** le corps de base (11) est configuré sous forme symétrique par rapport à ses axes centraux M_{L} et M_{S}.

5. Dispositif (21) selon une ou plusieurs des revendications 1 à 4, **caractérisé en ce que** le ou chaque côté étroit (S₁, S₂) présente un évidement en forme de U (14, 15).

6. Dispositif (21) selon la revendication 5, **caractérisé en ce que** l'évidement en forme de U (14, 15) ne s'étend que sur une partie du côté étroit (S₁, S₂).

7. Dispositif (21) selon la revendication 5 ou 6, **caractérisé en ce que** l'évidement en forme de U (14, 15) s'étend vers l'intérieur à partir de l'arête extérieure du côté étroit (S₁, S₂) sur au moins 5 mm et au plus 50 mm.

8. Dispositif (21) selon une ou plusieurs des revendications 1 à 7, **caractérisé en ce qu'**au moins une ouverture (18, 19) est configurée dans le corps de base (11) pour la fixation amovible de l'élément de raclage (10) sur le dispositif (21) pour séparer des substances mélangées entre elles de fluidités différentes.
